# EUROPEAN PATENT APPLICATION

(11) **EP 4 239 738 A1**
(43) Date of publication of application: **06.09.2023**
(21) Application number: 21885753.0
(22) Date of filing: 17.09.2021
(51) Int. Cl.: H01M 8/04225, H01M 8/04302, H01M 8/04701, H01M 8/0612, H01M 8/12

(54) **FUEL BATTERY MODULE UNIT AND FUEL BATTERY DEVICE**

(30) Priority: 30.10.2020 JP 2020183252
(71) Applicant: Kyocera Corporation, Kyoto-shi Kyoto 612-8501 (JP)
(72) Inventor: WASHIO, Takuro, Kyoto-shi, Kyoto 612-8501 (JP); SUGIHARA, Kazunari, Kyoto-shi, Kyoto 612-8501 (JP); YAMAUCHI, Kyosuke, Kyoto-shi, Kyoto 612-8501 (JP)
(74) Representative: TBK
(86) International application number: PCT/JP2021/034425
(87) International publication number: WO 2022/091634

(57) **Abstract**

A fuel battery module unit 19 includes a fuel battery module 10 and a controller 14. The fuel battery module 10 includes a reformer 12 and a fuel battery cell stack 13. The reformer 12 generates fuel gas by reforming raw fuel gas. The fuel battery cell stack 13 includes multiple fuel battery cells. The fuel battery cells generate power through a chemical reaction between the fuel gas generated by the reformer 12 and an oxidant. The controller 14 raises the temperature of the reformer 12 from startup until start of generation of power in the fuel battery cell stack 13. The controller 14 lowers the temperature of the reformer 12 multiple times until the fuel battery cell stack 13 starts generating power.

## Description

### CROSS-REFERENCE TO RELATED APPLICATIONS

This application claims priority of Japanese Patent Application No. 2020-183252 filed in Japan on October 30 2020 and the entire disclosure of this application is hereby incorporated by reference.

### TECHNICAL FIELD

The present disclosure relates to fuel battery module units and fuel battery devices.

### BACKGROUND OF INVENTION

A known fuel battery module includes a fuel battery cell stack and a reformer. The fuel battery cell stack generates electricity via electrochemical reaction of a fuel gas such as hydrogen. The reformer generates a fuel gas to be supplied to the fuel battery cell stack via a reforming reaction of raw fuel. Reforming reactions generally take place at a high temperature, and therefore the temperature of the reformer needs to be increased upon startup (refer to Patent Literature 1).

### CITATION LIST

### PATENT LITERATURE

Patent Literature 1: Japanese Unexamined Patent Application Publication No. 2007-103194

### SUMMARY

In a First Aspect of the present disclosure, a fuel battery module unit includes a fuel battery module and a controller.

The fuel battery module includes a reformer and a fuel battery cell stack.

The reformer is configured to generate fuel gas containing hydrogen by steam reforming raw fuel gas.

The fuel battery cell stack includes multiple fuel battery cells configured to generate electricity from an electrochemical reaction of the fuel gas generated by the reformer and an oxidant.

The controller is configured to increase a temperature of the reformer from startup until start of power generation in the fuel battery cell stack, and decrease the temperature of the reformer multiple times before the start of power generation in the fuel battery cell stack.

In a Second Aspect, a fuel battery device includes a fuel battery module and a controller.

The fuel battery module includes a reformer and a fuel battery cell stack.

The reformer is configured to generate fuel gas containing hydrogen by steam reforming raw fuel gas.

The fuel battery cell stack includes multiple fuel battery cells configured to generate electricity from an electrochemical reaction of the fuel gas generated by the reformer and an oxidant.

The controller is configured to control the reformer and the fuel battery cell stack.

The controller is configured to increase a temperature of the reformer from startup until start of power generation in the fuel battery cell stack, and decrease the temperature of the reformer multiple times before the start of power generation.

### BRIEF DESCRIPTION OF THE DRAWINGS

FIG. 1 is a functional block diagram illustrating the schematic configuration of a fuel battery device including a fuel battery module unit according to an embodiment.
FIG. 2 is a graph illustrating the temperature of a reformer, which is controlled by a controller in FIG. 1, from the startup of the reformer until the start of power generation.
FIG. 3 is a flowchart for describing startup processing executed by the controller in FIG. 1.

### DESCRIPTION OF EMBODIMENTS

Hereafter, an embodiment of a fuel battery module unit to which the present disclosure has been applied will be described while referring to the drawings.

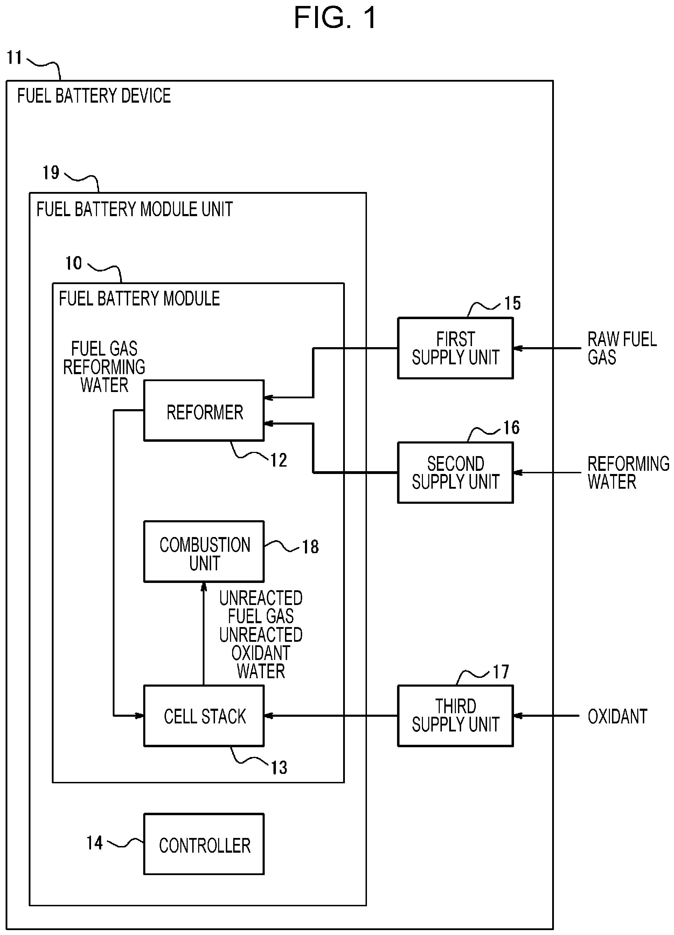

As illustrated in FIG. 1, a fuel battery module unit 19 according to an embodiment of the present disclosure is included in a fuel battery device 11. The fuel battery device 11 is a solid oxide fuel battery device and operates at an operating temperature of 700 to 1000 °C, for example. The fuel battery device 11 may include the fuel battery module unit 19, a first supply unit 15, a second supply unit 16, a third supply unit 17, and auxiliary equipment for the fuel battery module unit 19 such as a heat exchanger, a heat medium tank, and a reforming water tank.

The fuel battery module unit 19 includes a fuel battery module 10 and a controller 14. The fuel battery module 10 includes a reformer 12 and a cell stack (fuel battery cell stack) 13. Provided that the controller 14 has a configuration capable of performing the control described below, the controller 14 may be structurally located within an enclosure forming the fuel battery module 10 or outside the enclosure.

The reformer 12 generates a fuel gas such as hydrogen by steam reforming a raw fuel gas such as a hydrocarbon gas using reforming water. The reformer 12 is supplied with raw fuel gas via the first supply unit 15. Reforming water is supplied to the reformer 12 via the second supply unit 16.

The cell stack 13 includes multiple fuel battery cells. The fuel battery cells generate electricity via electrochemical reaction of a fuel gas and an oxidant such as oxygen contained in the air. Fuel battery cells generate water through an electrochemical reaction. Unreacted fuel and unreacted oxidant discharged from the fuel battery cells are combusted in a combustion unit 18 provided near the reformer 12. The energy generated by the combustion in the combustion unit 18 is used in a steam reforming reaction in the reformer 12. Water discharged from the fuel battery cells is discharged from the fuel battery module 10 in a hot gaseous state along with combustion gas arising from the combustion of unreacted fuel and unreacted oxidant.

The controller 14 includes one or more processors and memories. Such processors may include general-purpose processors into which specific programs are loaded to perform specific functions, and dedicated processors dedicated to specific processing. Dedicated processors may include an application specific integrated circuit (ASIC). Processors may include programmable logic devices (PLDs). PLDs may include field-programmable gate arrays (FPGAs). The controller 14 may be either a system-on-a-chip (SoC) or a system in a package (SiP), in which one or more processors work together.

The controller 14 directly or indirectly controls the fuel battery module 10 and each device for operating the fuel battery module 10. The controller 14 may, for example, control the temperature of the reformer 12. The controller 14 may control the temperature of the reformer 12, for example, based on the temperature at the inlet of the reformer 12, for example, and the temperature near the cell stack 13. The controller 14 may acquire the inlet temperature of the reformer 12 from a temperature sensor provided near the inlet of the reformer 12.

Specifically, the controller 14 can control the temperature of the reformer 12 by adjusting the rates at which raw fuel gas and reforming water are supplied to the reformer 12 and the rate at which the oxidant is supplied to the cell stack 13 after ignition of the combustion unit 18. The controller 14 may adjust the rate at which raw fuel gas is supplied to the reformer 12 by controlling the first supply unit 15. The controller 14 may adjust the rate at which reforming water is supplied to the reformer 12 by controlling the second supply unit 16. The controller 14 may adjust the rate at which the oxidant is supplied to the cell stack 13 by controlling the third supply unit 17.

The controller 14 may control the rate of supply of one out of the raw fuel gas and the reforming water based on a steam/carbon ratio (S/C ratio). For example, the controller 14 may control the second supply unit 16 so that the rate of supply of the reforming water relative to the rate of supply of the raw fuel gas has a value such that the set S/C ratio is achieved. Alternatively, the controller 14 may control the first supply unit 15 so that the rate of supply of the raw fuel gas relative to the rate of supply of the reforming water has a value such that the set S/C ratio is achieved.

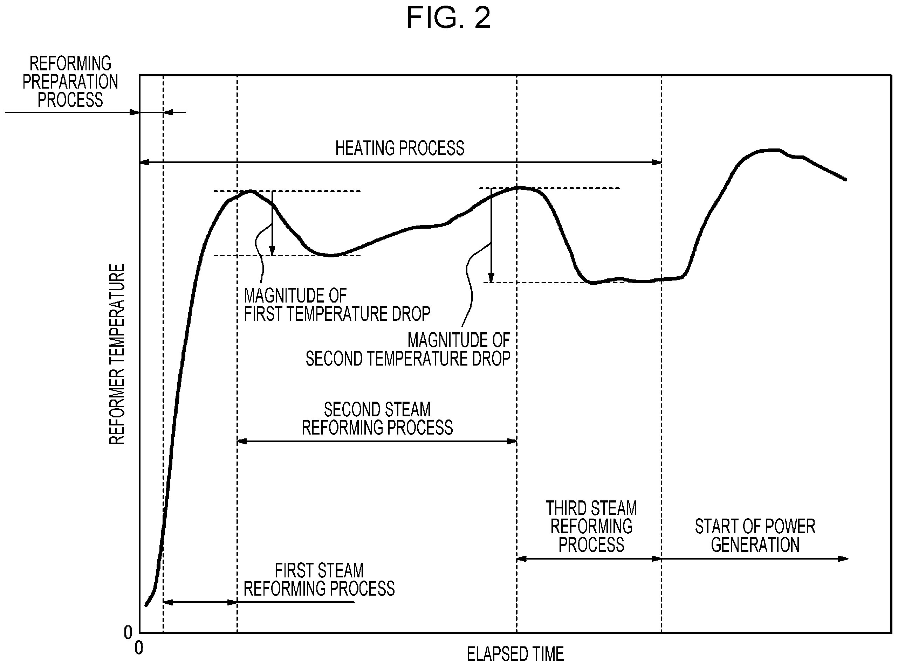

The controller 14 raises the temperature of the reformer 12 from the time of startup of the fuel battery module 10 until the start of power generation in the cell stack 13. The controller 14 lowers the temperature of the reformer 12 multiple times before the start of power generation in the cell stack 13, as illustrated in FIG. 2. Here, "the temperature of the reformer 12" may refer to the temperature at the inlet of the reformer 12. In the following description, the temperature of the reformer 12 is the inlet temperature of the reformer 12. The controller 14 may adjust the temperature of the reformer 12 so that the magnitude of a second temperature drop of the reformer 12 is greater than the magnitude of a first temperature drop of the reformer 12. The magnitude of a temperature drop is the difference between the maximum value and the minimum value during the process of the temperature rising, then falling, and then rising again. The controller 14 may control the temperature so that the duration of a second temperature drop of the reformer 12 is longer than the duration of a first temperature drop of the reformer 12. The duration of a temperature drop is the time from the time point where the maximum value is located to the time point at which the temperature has risen by 5% from the minimum value reached in the temperature drop from the time point where the maximum value is located. Hereafter, a more specific temperature control method used by the controller 14 in this embodiment will be described.

After startup, the controller 14 causes the first supply unit 15 to initiate supply of the raw fuel gas and causes the third supply unit 17 to initiate supply of the oxidant. The controller 14 also initiates the process of heating the reformer 12 and the cell stack 13 by igniting the combustion unit 18. The heating process may include a reforming preparation process, a first steam reforming process, a second steam reforming process, and a third steam reforming process, as described below. The reforming preparation process, the first steam reforming process, the second steam reforming process, and the third steam reforming process in the heating process may be performed in this order. The rate at which the raw fuel gas is supplied may be constant from the first steam reforming process to the third steam reforming process, or may be lowered in the reforming preparation process. The rate at which the oxidant is supplied may be constant from the first steam reforming process to the third steam reforming process, or may be lowered in the reforming preparation process.

When the temperature of the reformer 12 reaches a first reforming threshold during the reforming preparation process, the controller 14 causes the second supply unit 16 to initiate supply of reforming water. The first reforming threshold may be the temperature at which steam reforming can take place, and may vary depending on the position at which the temperature is measured, and for example, may be from 60 to 100 °C. The rate at which reforming water is supplied in the first steam reforming process may be a fixed rate that does not cause accidental ignition of the combustion unit 18. As a result of initiating the supply, the first steam reforming process is initiated. The controller 14 may adjust the rate at which the reforming water is supplied to a constant value by adjusting the S/C ratio.

When the temperature of the reformer 12 is greater than or equal to a second reforming threshold and the temperature near the cell stack 13 is greater than or equal to a first stack threshold during the first steam reforming process, the controller 14 increases the rate at which the reforming water is supplied while maintaining the rate at which the raw fuel gas is supplied. The second reforming threshold may be a temperature at which the pyrolysis of the raw fuel gas and thermal degradation of a reforming catalyst in the reformer 12 can be kept within expected operational ranges, and may be, for example, from 210 to 320 °C, depending on the position at which the temperature is measured. The first stack threshold is value obtained by multiplying the second stack threshold, which is described below, by a prescribed fraction, such as 1/3, and may be from 130 to 170 °C, for example.

The controller 14 may increase the rate at which the reforming water is supplied by increasing the S/C ratio. The controller 14 initiates the second steam reforming process by increasing the rate at which the reforming water is supplied while maintaining the rate at which the raw fuel gas is supplied. In switching from the first steam reforming process to the second steam reforming process, the rate at which the reforming water is supplied is increased while the rate at which the raw fuel gas is supplied is maintained, and therefore the temperature of the reformer 12 decreases once and then increases again.

When the temperature of the reformer 12 is greater than or equal to a third reforming threshold and the temperature near the cell stack 13 is greater than or equal to a second stack threshold during the second steam reforming process, the controller 14 increases the rate at which the reforming water is supplied while maintaining the rate at which the raw fuel gas is supplied. The third reforming threshold may be a temperature at which pyrolysis of the raw fuel gas and thermal degradation of a reforming catalyst in the reformer 12 can be kept within expected operational ranges, and may be, for example, the same as or different from the second reforming threshold. The second stack threshold is a value determined so as to satisfy a correlation with the third reforming threshold within a prescribed range, such as 60 to 70%, for example, of the stack temperature during rated operation of the fuel battery module, and may be from 430 to 470 °C, for example. The increase in the rate at which the reforming water is supplied may be an increase that causes the temperature of the reformer 12 to drop by an amount greater than the magnitude of the temperature drop of the reformer 12 that occurs during the switchover to the second steam reforming process. Alternatively, the increase in the rate at which the reforming water is supplied may be an increase that causes the temperature drop duration to be longer than the temperature drop duration of the reformer 12 during the switchover to the second steam reforming process.

The controller 14 may increase the rate at which the reforming water is supplied by increasing the S/C ratio. The controller 14 initiates the third steam reforming process by increasing the rate at which the reforming water is supplied while maintaining the rate at which the raw fuel gas is supplied. In switching from the second steam reforming process to the third steam reforming process, the rate at which the reforming water is supplied is increased while the rate at which the raw fuel gas is supplied is maintained, and therefore the temperature of the reformer 12 decreases once and then increases again.

The controller 14 may allow the power generated by the cell stack 13 to be output when the temperature in the vicinity of the cell stack 13 exceeds a third stack threshold.

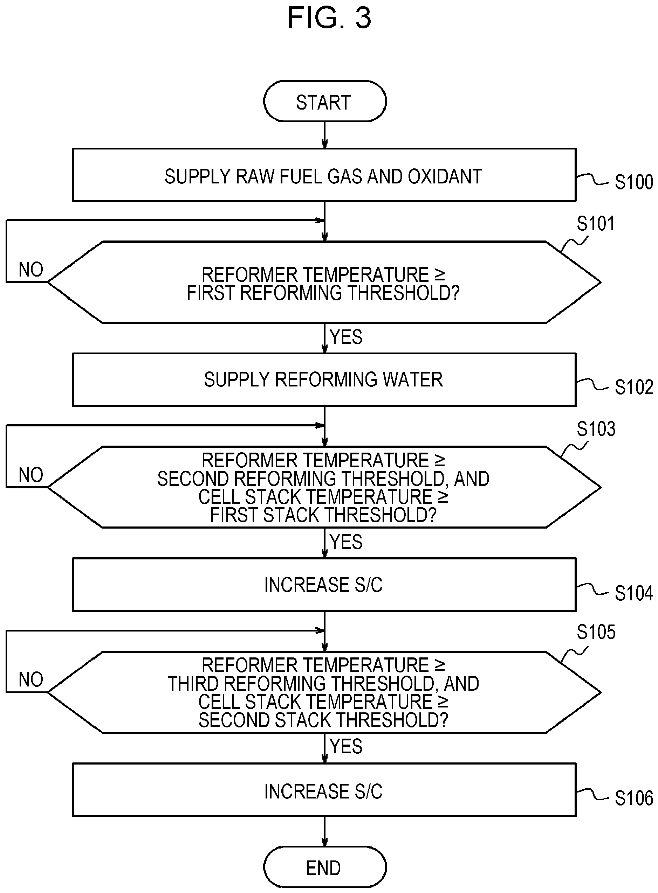

Next, startup processing performed by the controller 14 in this embodiment will be described using the flowchart in FIG. 3. The startup processing begins, for example, when an input unit of the fuel battery device 11 detects a user input for starting up the fuel battery device 11.

In Step S100, the controller 14 controls the first supply unit 15 and the third supply unit 17 so as to initiate the supply of the raw fuel gas and the oxidant. After the supply begins, the process proceeds to Step S101.

In Step S101, the controller 14 determines whether the temperature of the reformer 12 has reached or, in other words, is greater than or equal to the first reforming threshold. When the temperature of the reformer 12 is not greater than or equal to the first reforming threshold, the process returns to Step S101. When the temperature of the reformer 12 is greater than or equal to the first reforming threshold, the process proceeds to Step S102.

In Step S102, the controller 14 controls the second supply unit 16 to start supplying the reforming water. After the supply begins, the process proceeds to Step S103.

In Step S 103, the controller 14 determines whether the temperature of the reformer 12 is greater than or equal to the second reforming threshold and the temperature near the cell stack 13 is greater than or equal to the first stack threshold. When the temperature of the reformer 12 is less than the second reforming threshold or the temperature near the cell stack 13 is less than the first stack threshold, the process returns to Step S103. When the temperature of the reformer 12 is greater than or equal to the second reforming threshold and the temperature near the cell stack 13 is greater than or equal to the first stack threshold, the process proceeds to Step S104.

In Step S104, the controller 14 controls the second supply unit 16 so as to increase the rate at which the reforming water is supplied by increasing the S/C ratio. After the S/C is increased, the process proceeds to Step S105.

In Step S105, the controller 14 determines whether the temperature of the reformer 12 is greater than or equal to the third reforming threshold and the temperature near the cell stack 13 is greater than or equal to the second stack threshold. When the temperature of the reformer 12 is less than the third reforming threshold or the temperature near the cell stack 13 is less than the second stack threshold, the process returns to Step S105. When the temperature of the reformer 12 is greater than or equal to the third reforming threshold and the temperature near the cell stack 13 is greater than or equal to the second stack threshold, the process proceeds to Step S106.

In Step S106, the controller 14 controls the second supply unit 16 so as to increase the rate at which the reforming water is supplied by increasing the S/C ratio. After S/C is increased, the startup processing ends.

In the thus-configured fuel battery module 10 of this embodiment, the temperature of the reformer 12 is increased from startup until the start of power generation, and the temperature of the reformer 12 is lowered multiple times before the start of power generation. In a steam reforming reaction, the design reaction temperature is determined based on the equilibrium of the steam reforming reaction, the effects of pyrolysis, catalyst degradation, and so on. If the design reaction temperature is exceeded, deactivation of the catalyst due to carbon deposition on the catalyst surface caused by the progressive thermal decomposition of the raw fuel gas, degradation of the reforming efficiency due to thermal degradation of the catalyst, and degradation of the reformer 12 itself will occur. On the other hand, in the fuel battery module 10 having the above-described configuration, since the temperature of the reformer 12 is intentionally lowered multiple times before the start of power generation, an excessive rise in the temperature of the reformer 12 beyond the designed reaction temperature during the process of increasing the temperature of the reformer 12 before the start of power generation can be reduced. In particular, in this embodiment, the fuel battery module 10 lowers the temperature of the reformer 12 multiple times, and therefore the certainty with which an excessive rise in temperature is suppressed can be improved. Thus, the fuel battery module 10 can extend the life of the reformer 12 along with the catalyst.

In the fuel battery module 10 of this embodiment, the magnitude of the second temperature drop of the reformer 12 is larger than the magnitude of the first temperature drop of the reformer 12. With this configuration, in the fuel battery module 10, the magnitude of the temperature drop in the first temperature drop, which is performed in a situation where the vicinity of the cell stack 13 or the combustion unit 18 is not sufficiently heated, can be reduced, and therefore the possibility of accidental ignition of the combustion unit 18 can be reduced.

In the fuel battery module 10 of this embodiment, the duration of the second temperature drop of the reformer 12 is longer than the duration of the first temperature drop of the reformer 12. With this configuration, in the fuel battery module 10, the duration of the temperature drop in the first temperature drop, which is performed in a situation where the vicinity of the cell stack 13 or the combustion unit 18 is not sufficiently heated, can be made shorter, and therefore the possibility of accidental ignition of the combustion unit 18 can be reduced.

In the fuel battery module 10 of this embodiment, the rate at which the raw fuel gas is supplied is maintained constant without being reduced in the first to third steam reforming processes. With this configuration, the fuel battery module 10 is able to reduce the time required to raise the temperature to the power generation operating temperature of the cell stack 13 while reducing the occurrence of overheating of the reformer 12. Therefore, the fuel battery module 10 can shorten the startup time.

A variety of variations and amendments may be made to the content of the present disclosure based on the present disclosure by one skilled in the art. Therefore, note that such variations and amendments are included within the scope of the present disclosure. For example, in each embodiment, each functional part, each means, each step and so on can be added to other embodiments so long as there are no logical inconsistencies, or can be replaced with each functional part, each means, each step, and so on of other embodiments. In each embodiment, a plurality of each functional part, each means, each step, and so on can be combined into a single functional part, means, or step or divided into multiple functional parts, means, or steps. Each of the above-described embodiments of the present disclosure is not limited to faithful implementation of each of the described embodiments, and may be implemented by combining or omitting some of the features as appropriate.

For example, in this embodiment, the controller 14 temporarily lowers the temperature of the reformer 12 twice while the temperature of the reformer 12 is raised from startup until power generation, but the temperature may instead be temporarily lowered three or more times.

### REFERENCE SIGNS

- 10: fuel battery module
- 11: fuel battery device
- 12: reformer
- 13: cell stack
- 14: controller
- 15: first supply unit
- 16: second supply unit
- 17: third supply unit
- 18: combustion unit
- 19: fuel battery module unit

## Claims

1. A fuel battery module unit comprising:
a fuel battery module including a reformer configured to generate fuel gas containing hydrogen by steam reforming raw fuel gas, and a fuel battery cell stack including multiple fuel battery cells configured to generate electricity from an electrochemical reaction of the fuel gas generated by the reformer and an oxidant; and
a controller configured to increase a temperature of the reformer from startup until start of power generation in the fuel battery cell stack, and decrease the temperature of the reformer multiple times before the start of power generation in the fuel battery cell stack.

2. The fuel battery module unit according to claim 1,
wherein a magnitude of a second temperature drop of the reformer performed by the controller is greater than a magnitude of a first temperature drop of the reformer performed by the controller.

3. The fuel battery module unit according to claim 1 or 2,
wherein a duration of a second temperature drop of the reformer performed by the controller is greater than a duration of a first temperature drop of the reformer performed by the controller.

4. A fuel battery device comprising:
the fuel battery module unit according to any one of claims 1 to 3; and
auxiliary equipment.

5. A fuel battery device comprising:
a fuel battery module including a reformer configured to generate fuel gas containing hydrogen by steam reforming raw fuel gas, and a fuel battery cell stack including multiple fuel battery cells configured to generate electricity from an electrochemical reaction of the fuel gas generated by the reformer and an oxidant; and
a controller configured to control the reformer and the fuel battery cell stack,
wherein the controller increases a temperature of the reformer from startup until start of power generation in the fuel battery cell stack, and decreases the temperature of the reformer multiple times before the start of power generation.
